# EUROPÄISCHE PATENTSCHRIFT

(11) **EP 3 686 133 B1**
(45) Veröffentlichungstag und Bekanntmachung des Hinweises auf die Patenterteilung: **28.06.2023**
(21) Anmeldenummer: 20152802.3
(22) Anmeldetag: 21.01.2020
(51) Int. Cl.: B65G 13/00, B65G 13/07, B65G 13/11, B65G 43/00

(54) **LÄNGSFÖRDERER, INSBESONDERE ROLLENBAHN MIT EINGRIFFSSCHUTZ**
LONGITUDINAL CONVEYOR, IN PARTICULAR A ROLLER TRACK WITH INTERFERENCE PROTECTION
TRANSPORTEUR LONGITUDINAL, EN PARTICULIER TRANSPORTEUR À ROULEAUX POURVU DE PROTECTION CONTRE L'ENTRÉE EN PRISE

(30) Priorität: 22.01.2019 DE 102019101473
(43) Veröffentlichungstag der Anmeldung: 29.07.2020
(73) Patentinhaber: Heron Innovations Factory GmbH, 6850 Dornbirn (AT)
(72) Erfinder: BEER, Christian, 6858 Schwarzach (AT)
(74) Vertreter: Riebling, Peter

(56) Entgegenhaltungen:
- DE-A1- 2 815 351
- DE-A1- 3 812 863
- DE-U1-202005 006 253
- DE-U1-202010 015 597
- FR-A1- 2 946 034
- US-A- 5 056 653

## Beschreibung

Die Erfindung betrifft einen Längsförderer, insbesondere eine Rollenbahn zur Forderung von Stückgütern nach dem Oberbegriff des Patentanspruches 1. Eine derartiger Längsförderer in der Ausführung einer Rollenbahn ist beispielsweise mit der DE 7728796 U1 bekannt geworden. Dort wurde erkannt, dass die Tragrollen von Fördergurten der Gefahr ausgesetzt sind, dass vom Fördergurt herabfallende Materialstücke, insbesondere Pellets, Kies usw., sich zwischen der äußeren Stirnseite und der Halterung der Tragrolle einklemmen und damit die Tragrolle blockieren könnten. Zur Vermeidung dieses Nachteiles sieht die genannte Druckschrift vor, dass das stirnseitige Lager der jeweiligen Förderrolle durch eine Abdeckscheibe abgedeckt ist. Nachdem die Rollenbahn mit Fördergurten arbeitet, welche die Oberfläche der Rollenbahn vollständig überdecken, besteht nicht die Gefahr, dass mit dem Finger einer Hand eines Benutzers in einen Spalt zwischen Fördergurt und Förderrolle gegriffen werden kann. Die genannte Rollenbahn arbeitet nicht mit Förderriemen, bei denen eine solche Gefahr besteht.

Die US 5 056 653 A zeigt einen gemäß dem Oberbegriff von Anspruch 1 ausgebildeten Längsförderer zur Förderung von Stückgütern bestehend aus einer Anzahl von drehangetriebenen Förderrollen, die in gegenseitigem Teilungsabstand in den Seitenwänden eines Längsprofils auf Achsbolzen drehbar gelagert sind und einen von Treibriemen gebildeten, paarweisen Antrieb aufweisen, wobei für den paarweisen Antrieb jede angetriebene Förderrolle ein von zwei Treibriemen umschlungenes Antriebsrad aufweist.

Auch bei diesem Längsförderer besteht die Gefahr, dass mit dem Finger einer Hand eines Benutzers in einen Spalt zwischen Fördergurt und Förderrolle gegriffen werden kann.

Die DE 21 2008 000 096 U1 beschreibt eine Rollenbahn, wobei die Rollenbahn als kettengetriebener Rollenförderer ausgebildet ist und an jeder Rolle zwei Kettenritzel angeordnet sind, die mittels Ketten in Richtung zu den benachbarten Rollen angetrieben werden. Ein Eingriffsschutz zur Vermeidung des Eingriffes der Finger eines Benutzers in den Zwischenraum zwischen den einzelnen, im Abstand voneinander angeordneten Zugmitteln ist jedoch nicht gezeigt.

Die DE 28 15 351 A1 offenbart einen Längsförderer, insbesondere Rollenbahn zur Förderung von Stückgütern, bestehend aus einer Anzahl von drehangetriebenen Förderrollen, die in gegenseitigem Teilungsabstand in den Seitenwänden eines Längsprofils auf Achsbolzen drehbar gelagert sind. Jedem Antriebsrad der Förderrolle ist ein Einklemmschutz mit einer Lagerschildplatte zugeordnet, die von dem Achsbolzen der Förderrolle durchgriffen ist und sich flächig an der Innenseite der Seitenwand des Längsprofils anlegt.

An der Lagerschildplatte sind mindestens zwei einen gegenseitigen Abstand zueinander aufweisende und annähernd zueinander parallele Abdeckplatten befestigt, welche das Antriebsrad der Förderrolle mindestens teilweise abdecken.

Somit lässt sich aus der DE 28 15 351 A1 zwar ein Einklemmschutz entnehmen, jedoch ist dieser bauartbedingt nur für einen einfachen Antrieb vorgesehen und nicht geeignet einen paarweisen Antrieb der Förderrolle abzudecken. Zudem ist der Einklemmschutz fest mit einer Winkelplatte verbunden und erschwert somit eine Demontage.

Die DE 20 2006 017 757 U1 zeigt die Seitenwange einer zum Transport von Gegenständen vorgesehenen Rollenbahn, mit einem zum Tragen eine Mehrzahl aufeinanderfolgender Transportrollen dienenden Basisprofilteil. Die einander gegenüberliegenden Basisprofilteile der Seitenwangen sind etwa U-förmig profiliert und es sind als Strangpressteile aus einem Aluminiummaterial ausgebildet.

Die jeweils einer Förderrolle zugeordneten Antriebsräder, die von dem Zugmittel übergriffen sind, sind allerdings in dem geschlossenen U-Profil der Seitenwangen untergebracht, was einen optimalen Eingriffsschutz bietet, jedoch mit dem Nachteil verbunden ist, dass die Förderrollen in den Seitenwangen des U-Profils nicht in beliebigen Rasterabständen bei Bedarf versetzt werden können, weil eine Demontage und Umsetzung der Förderrollen auf verschiedene andere gegenseitige Abstände nicht vorgesehen ist.

Der Erfindung liegt deshalb die Aufgabe zugrunde einen Längsförderer, vorzugsweise eine Rollenbahn zur Förderung von Stückgütern der eingangs genannten Art so weiter zu bilden, dass die Möglichkeit besteht, den gegenseitigen Abstand der Förderrollen (auch Teilungsabstand genannt) einfach zu verändern und gleichwohl einen zuverlässigen Eingriffsschutz für die an den Förderrollen angeordneten Zugmittel zu ermöglichen.

Zur Lösung der gestellten Aufgabe ist die Erfindung durch die technische Lehre des Anspruches 1 gekennzeichnet.

Nach einem vorteilhaften Merkmal der Erfindung ist vorgesehen, dass dem Antriebsrad der Förderrolle ein Einklemmschutz bestehend aus einer Lagerschildplatte zugeordnet ist, die von dem Achsbolzen der Förderrolle durchgriffen ist und sich flächig an der Innenseite der Seitenwand des Längsprofils anlegt, wobei an der Lagerschildplatte mindestens zwei einen gegenseitigen Abstand zueinander aufweisende und annähernd zueinander parallele Abdeckplatten befestigt sind, welche das Antriebsrad der Förderrolle mindestens beidseitig und zumindest teilweise seitlich abdecken.

Mit der gegebenen technischen Lehre ergibt sich der Vorteil, dass der Eingriffsschutz für die Förderrollen und die über das jeweilige Antriebsrad der Förderrolle laufenden Treibriemen (Zugmittel) nicht mehr an der Seitenwange der Rollenbahn angeordnet sind, sondern an der Förderrolle selbst.

Damit besteht der Vorteil, dass der an der Förderrolle, insbesondere an dem Antriebsrad der Förderrolle angeordnete Eingriffsschutz zusammen mit der Förderrolle aus der Seitenwange der Rollenbahn herausgenommen und an einer anderen Stelle eingesetzt werden kann, weil der Eingriffsschutz bei der Umsetzung der Förderrolle immer "mitgeht".

Dies bedeutet, dass der Eingriffsschutz an der Stirnseite der Förderrolle und zwar an deren Antriebsrad, welches von dem Treibriemen umschlungen ist, montiert ist und bevorzugt aus der besagten Lagerschildplatte besteht, an welcher zwei oder mehrere zueinander parallele Abdeckplatten befestigt werden können, die mindestens teilweise seitlich das jeweilige Antriebsrad der Förderrolle umgreifen, um so einen seitlichen Einklemmschutz für den das Antriebsrad umgreifenden Treibriemen zu ermöglichen.

In einer Weiterbildung der Erfindung kann es vorgesehen sein, dass mehr als zwei zueinander parallele Abdeckplatten lösbar und steckbar an der Lagerschildplatte angeordnet sind. In diesem Fall kann auch ein oberer und/oder ein unterer Eingriffsschutz für das von den Zugmitteln umschlungene Antriebsrad der Förderrolle verwirklicht werden, wenn die zusätzlichen Abdeckplatten auch die obere und/oder untere Seite des förderrollenseitigen Antriebsrades mindestens teilweise umgreifen.

Die Erfindung ist nicht auf die Verwendung eines Treibriemens als Zugmittel beschränkt, wobei jedoch in einem bevorzugten Ausführungsbeispiel der Treibriemen als verzahnter Flachriemen ausgebildet ist.

Als Zugmittel können die allgemein bekannten Zugmittel wie Ketten, Riemen, Zahnriemen, Rundschnüre oder ähnliches verwendet werden.

Die Erfindung beschreibt demnach einen Längsförderer, vorzugsweise einen Rollenförderer zur Förderung von Stückgütern, bei denen der Einklemmschutz unmittelbar an der Lagerschildplatte der jeweiligen Förderrolle angeordnet ist, wobei es bevorzugt wird, dass die Befestigung der Abdeckplatten auf der Lagerschildplatte steckbar ausgebildet ist.

In einer bevorzugten Ausgestaltung ist es ferner vorgesehen, dass die Steckverbindung zwischen der Lagerschildplatte und den seitlich daran anschließenden und im Winkel von 90° dazu angeordneten Abdeckplatten durch an den Abdeckplatten angeformten Rastbolzen erfolgt, die in zugeordnete Stecköffnungen der Lagerschildplatte lösbar eingreifen. Auf diese Weise kann bedarfsgerecht die jeweilige Abdeckplatte von der Lagerschildplatte abgezogen und wieder aufgesteckt werden.

In kinematischer Umkehrung kann es auch vorgesehen sein, dass an den Abdeckplatten Einstecköffnungen angeordnet sind und an der Lagerschildplatte zugeordnete Rastbolzen, die in den Einstecköffnungen eingesteckt werden können.

Es wird dabei bevorzugt, wenn jede der Abdeckplatten eine Bogenform aufweist, d.h. sie ist leicht bogenförmig gekrümmt, wobei der Bogendurchmesser etwa dem Durchmesser des von der Abdeckplatte abzudeckenden Antriebsrades entspricht. Damit ergibt sich nur ein geringer radialer Abstand zu der abzudeckenden Förderrolle, wobei dieser Abstand kleiner sein sollte als der Durchmesser einer Fingerkuppe.

Mit der gegebenen technischen Lehre ist es nun erstmals möglich, die Fördermittel, vorzugsweise die Förderrollen leicht lösbar in zugeordneten Aufnahmeöffnungen eines U-Profils der Seitenwange anzuordnen, wobei in diesem Fall das jeweilige Antriebsrad der Förderrolle außerhalb des U-Profils liegt, um so eine leichte Demontage der jeweiligen Förderrolle aus der Seitenwange des Längsprofiles und des Treibriemens zu erreichen.

Im Gegensatz zum Stand der Technik übergreift deshalb nicht das U-Profil der Seitenwange das Antriebsrad und das jeweilige, das Antriebsrad umgreifende Zugmittel, sondern die genannten Teile sind freiliegend an der Seitenwand des Längsprofiles der Seitenwange angeordnet und der beschriebene (seitliche und/oder obere und/oder untere) Einklemmschutz wird durch die jeweilige Lagerschildplatte der Förderrolle in Verbindung mit den auf der Lagerschildplatte aufsteckbaren Abdeckplatten erreicht.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Im Folgenden wird die Erfindung anhand von lediglich einen Ausführungsweg darstellenden Zeichnungen näher erläutert. Hierbei gehen aus den Zeichnungen und ihrer Beschreibung weitere erfindungswesentliche Merkmale und Vorteile der Erfindung hervor, welche durch die Ansprüche definiert wird.

Es zeigen:
Figur 1: Seitenansicht einer Rollenbahn nach dem Stand der Technik
Figur 2: Draufsicht auf die Rollenbahn nach Figur 1 nach dem Stand der Technik
Figur 3: eine Seitenansicht einer erfindungsgemäßen Rollenbahn
Figur 4: die Draufsicht auf die Rollenbahn nach Figur 3
Figur 5: perspektivische Ansicht einer nur teilweise dargestellten Rollenbahn
Figur 6: eine perspektivische Ansicht von der gegenüberliegenden Seite der nur teilweise dargestellten Rollenbahnen
Figur 7: eine weitere perspektivische Ansicht der nur teilweise dargestellten Rollenbahnen
Figur 8: die Draufsicht auf die Lagerschildplatte
Figur 9: die Seitenansicht der Lagerschildplatte nach Figur 8
Figur 10: die Stirnansicht der Lagerschildplatte
Figur 11: die Seitenansicht einer Abdeckplatte
Figur 12: die Draufsicht auf die Abdeckplatte
Figur 13: Die Stirnansicht auf die Abdeckplatte

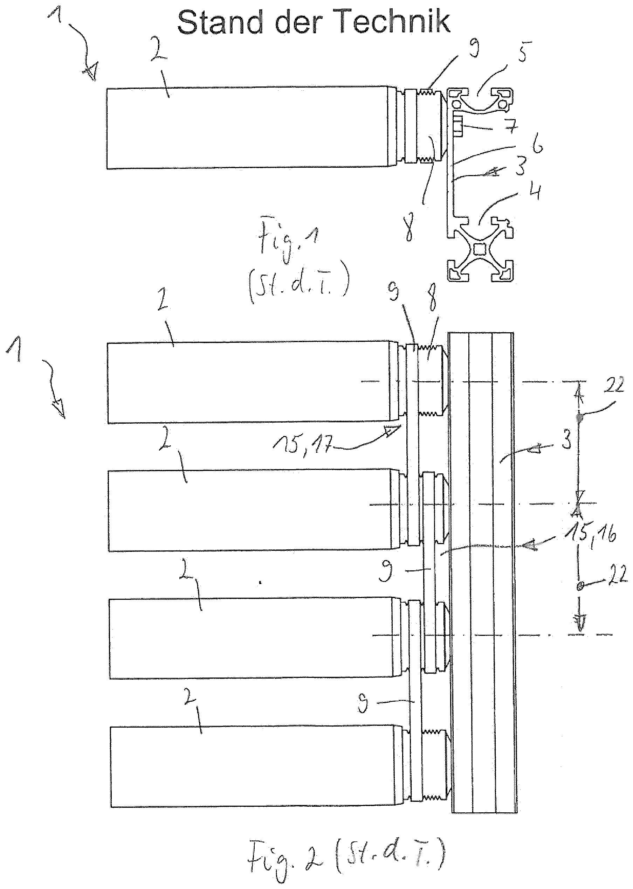

In den Figuren 1 bis 7 ist eine Rollenbahn 1 nur teilweise dargestellt, weil nur die rechte Seite der Förderrollen 2 mit der Anbindung an das Längsprofil 3 der rechten Seitenwange der Rollenbahn 1 gezeigt ist.

Aus zeichnerischen Vereinfachungsgründen ist jedoch nicht gezeigt, dass auch die linke Seite der jeweiligen Förderrollen 2 in einer nicht näher dargestellten Seitenwange eines Längsprofiles 3 aufgenommen ist und dort drehbar gelagert ist. Die Antriebsräder und Zugmittel sind jedoch in diesem Ausführungsbeispiel nur auf der rechten Seite der Förderrollen 2 angeordnet.

Lediglich die jeweilige rechte Seite der Förderrolle 2 ist mit einem Antriebsrad 8 versehen, welches drehfest mit der Förderrolle 2 verbunden ist, wobei das Antriebsrad 8 z.B. mit ringsumlaufenden Ringnuten versehen ist, die von zwei Treibriemen 9 umschlungen sind, wie dies in Figur 2 nach dem Stand der Technik dargestellt ist. Jeder der beiden Treibriemen treibt eine benachbarte Förderrolle an.

Die Seitenwange der Rollenbahn 1 ist als extrudiertes Längsprofil 3 ausgebildet und weist einen unteren Profilschenkel 4 und einen oberen Profilschenkel 5 auf, wobei der vorzugsweise 6-eckige Achsbolzen 7 der jeweiligen Förderrolle 2 eine 6-kantförmige Bohrung in der Seitenwand 6 des Längsprofiles 3 durchgreift und dort festgelegt ist.

Durch Lösen des Achsbolzens 7 kann somit jede Förderrolle 2 in einem beliebigen Abstand zu der benachbarten Förderrolle an der Seitenwand 6 versetzt werden, vorausgesetzt, dass die sechskantig-profilierten Bohrungen für die Aufnahme der Achsbolzen 7 in einem bestimmten Teilungsabstand 22 angeordnet sind.

Es können unterschiedliche Teilungsabstände 22 für die Förderrollen 2 vorgesehen werden, wobei auch die Treibriemen 9 ausgetauscht werden.

Gemäß den Figuren 1 und 2 wurde festgestellt, dass bei den freiliegenden, nicht vom U-Profil des Längsprofiles 3 abgedeckten Antriebsrädern 8 die Gefahr der Einklemmung besteht, wenn beispielsweise mit den Fingern einer Hand in der Pfeilrichtung15 in eine Spaltöffnung 16, 17 eingegriffen wird, die sich zwischen den Antriebsrädern 8 und den Treibriemen 9 ergibt.

Die Förderrollen 2 sind über nicht näher dargestellte Kugel- oder Gleit- oder Wälzlager auf nicht näher dargestellten Achsen gelagert, wobei die Achsen mit Hilfe der Achsbolzen 7 in der Seitenwand 6 festgelegt sind.

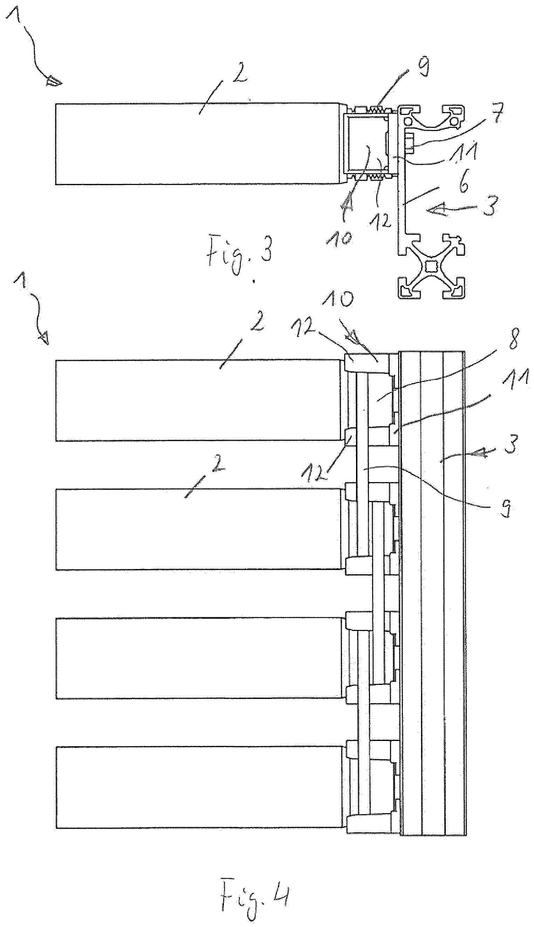

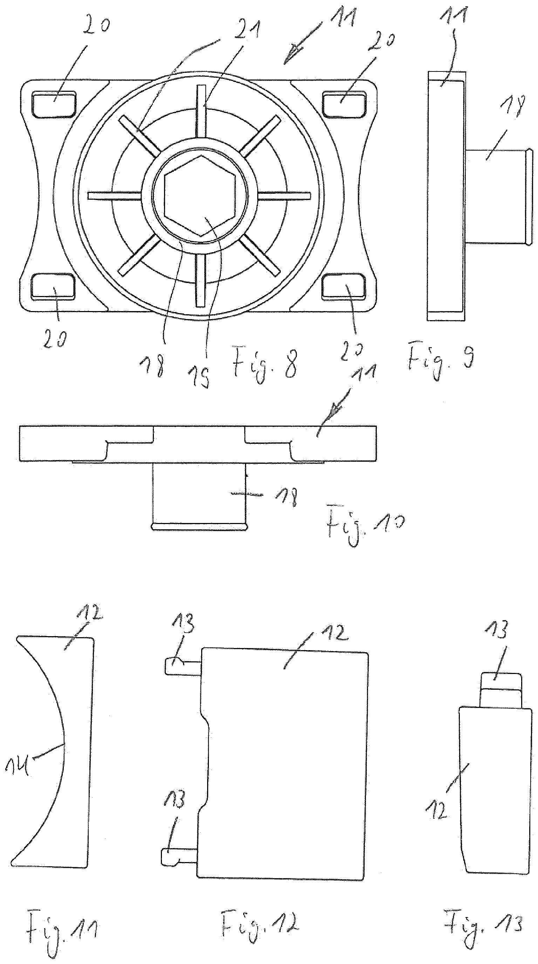

Um die in Figur 2 nach dem Stand der Technik dargestellten Spaltöffnungen 16, 17 abzudecken, sieht die Erfindung nach den Zeichnungen der Figuren 3 bis 13 einen Einklemmschutz 10 vor, der im Wesentlichen aus einer Lagerschildplatte 11 (siehe die Figuren 8 bis 10) besteht, die feststehend mit der Achse der Vorderrolle 2 verbunden ist und vom Achsbolzen 7 durchgriffen an der Seitenwand 6 außenliegend befestigt ist.

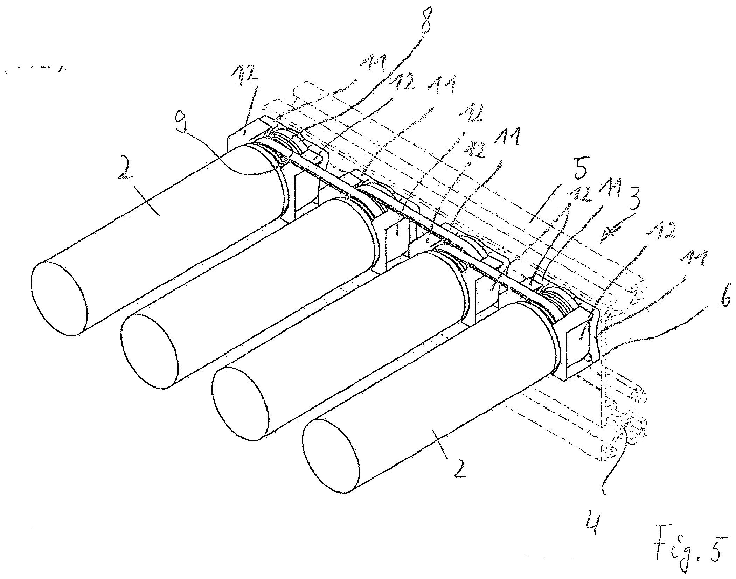

So ist besonders aus den Figuren 5 bis 7 zu entnehmen, dass sich die Lagerschildplatte 11 an die Außenseite der Seitenwand 6 anlegt. Auf die Lagerschildplatte 11 sind in diesem Ausführungsbeispiel zwei seitliche Abdeckplatten 12 aufgesteckt, die etwa bogenförmig profiliert sind, wobei die Bogenform etwa der Bogenform des jeweiligen Antriebsrades 8 entspricht, sodass zwischen den Abdeckplatten und dem Antriebsrad nur noch ein geringer Spalt ergibt, dessen Größe kleiner ist als der Durchmesser einer Fingerkuppe.

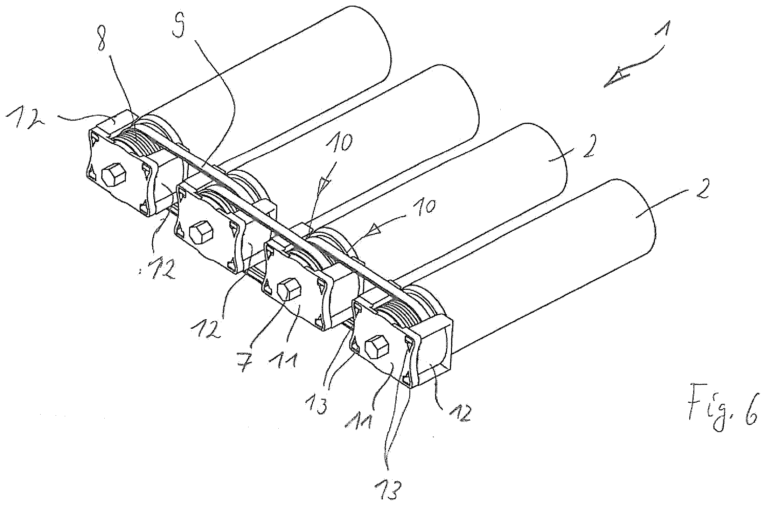

Dadurch wird ein wirksamer Einklemmschutz durch die beiden voneinander beabstandet angeordneten Abdeckplatten 12 erreicht. Somit decken die Abdeckplatten 12 weitestgehend die von dem Treibriemen 9 umschlungenen Antriebsräder 8 der Förderrollen 2 ab. Der sich dadurch ergebende Einklemmschutz 10 ist aus Figur 6 zu entnehmen.

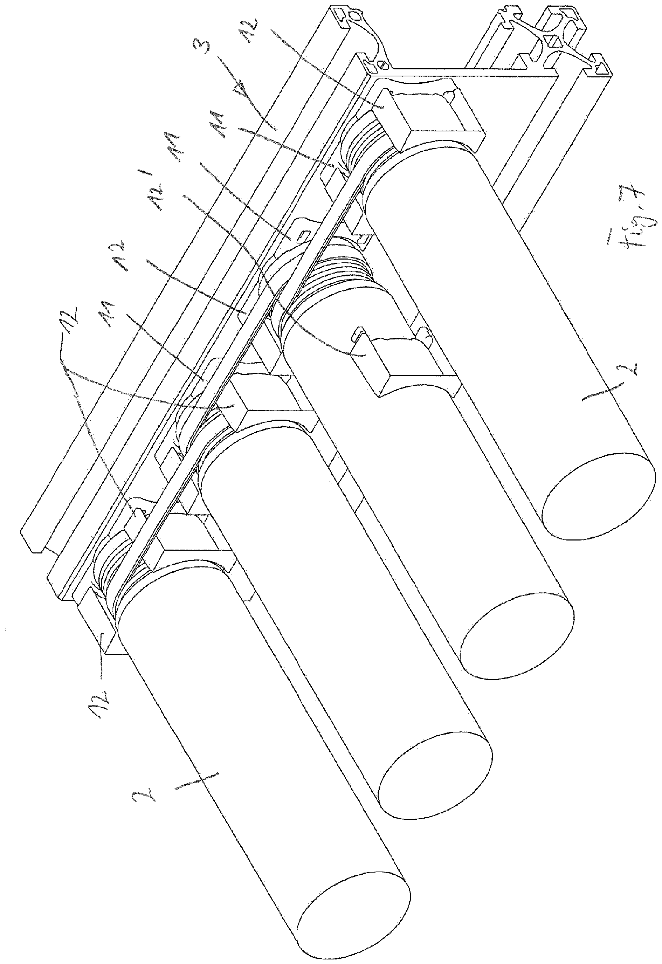

Die Figur 7 zeigt, dass die Abdeckplatten 12 leicht lösbar und steckbar in zugeordneten Stecköffnungen 20, siehe Figur 8 der jeweiligen Lagerschildplatte 11 aufgenommen sind.

Die Figur 7 zeigt auch eine teilweise entfernte Abdeckplatte 12', die gerade aus der Stecköffnung 20 der Lagerschildplatte 11 entfernt wurde. Die Abdeckplatten 12 bestehen bevorzugt aus einem Kunststoffmaterial.

Bei der Lagerschildplatte 11 gemäß den Figuren 8 bis 10 handelt es sich um ebenfalls um eine Kunststoffplatte, welche über Verstärkungsrippen 21 einen angeformten Hülsenansatz 18 aufweist, der eine sechskantige oder ähnlich profilierte Aufnahmeöffnung 19 bildet, durch welchen die Achse und/oder der an die profilierte Aufnahmeöffnung 19 formangepasste Achsbolzen 7 der Förderrolle 2 hindurchgreift und dort drehfest festgelegt ist.

Seitlich an der Lagerschildplatte 11 sind die Stecköffnungen 20 ausgebildet.

Die in den Figuren 11 bis 13 dargestellte Abdeckplatte 12 weist an ihren Enden Rastbolzen 13 auf, welche in die Stecköffnungen 20 der Lagerschildplatte 11 einrastbar sind. Figur 11 zeigt, dass die Abdeckplatte eine Bogenform 14 aufweist.

Mit den Merkmalen der Erfindung, nämlich der Schaffung eines neuartigen Einklemmschutzes 10, der mit der Förderrolle 2 verbunden ist, ergibt sich nun erstmals die Möglichkeit, dass die jeweilige Förderrolle 2 unter Änderung des Teilungsabstandes 22 an unterschiedlicher Aufnahmepositionen im Längsprofil 3 der Rollenbahn 1 umgesetzt und dort festgelegt werden kann. Der Einklemmschutz 10 geht dabei immer mit, weil auf eine Befestigung eines Einklemmschutzes 10 am Längsprofil 3 verzichtet wird.

Soweit ein Einklemmschutz im Stand der Technik bekannt ist, war dieser immer am Längsprofil 3 befestigt, nicht aber an der Förderrolle 2.

Die Erfindung ist nicht auf einen Längsförderer in seiner bevorzugten Ausgestaltung als Rollenbahn mit zylindrischen und über Treibriemen angetriebenen Förderrollen beschränkt. Es können sämtliche anderen Fördermittel eines Längsförderers verwendet werden, die von einem Treibriemen oder einem Fördertrum angetrieben sind und auswechselbar an einem Traggestell angeordnet sind. Wegen des Vorteils der leichten Auswechselbarkeit entsteht dabei das Problem des Zugriffschutzes, das mit den Merkmalen der Erfindung gelöst wird.

Statt der zylindrischen, auswechselbaren Förderrollen können deshalb auch andere, drehangetriebene Fördermittel verwendet werden, bei denen ebenfalls der erfindungsgemäße Zugriffsschutz verwendet wird. Derartige Fördermittel können z.B. unrunde Förderrollen sein oder auch zylindrische Förderrollen, die ein Förderband oder Ketten-, Schnur- oder Riemenbänder tragen und von diesen drehangetrieben sind. Bei der Anordnung eines solchen Längsförderers mit einem Fördertrum müssen nur einige, wenige Förderrollen drehangetrieben sein. In manchen Fällen erfolgt dann der Drehantrieb ohne den hier beschriebenen Treibriemen nur über das Fördertrum allein.

### Zeichnungslegende

1. Rollenbahn
2. Förderrolle
3. Längsprofil
4. Profilschenkel (unten)
5. Profilschenkel (oben)
6. Seitenwand
7. Achsbolzen
8. Antriebsrad
9. Treibriemen
10.Einklemmschutz
11.Lagerschildplatte
12.Abdeckplatte 12'
13.Rastbolzen
14.Bogenform
15.Pfeilrichtung
16.Spaltöffnung
17.Spaltöffnung
18.Hülsenansatz
19.Aufnahmeöffnung
20.Stecköffnung
21.Verstärkungsrippe
22.Teilungsabstand

## Patentansprüche

1. Längsförderer, insbesondere Rollenbahn zur Förderung von Stückgütern bestehend aus einer Anzahl von drehangetriebenen Fördermitteln, vorzugsweise Förderrollen (2), die in gegenseitigem Teilungsabstand (22) in den Seitenwänden (6) eines Längsprofils (3) auf Achsbolzen (7) drehbar gelagert sind und einen von Treibriemen (9) gebildeten, paarweisen Antrieb aufweisen, wobei für den paarweisen Antrieb jede angetriebene Förderrolle (2) ein von zwei Treibriemen (9) umschlungenes Antriebsrad (8) aufweist, **dadurch gekennzeichnet, dass** jedem Antriebsrad (8) des Fördermittels, vorzugsweise der Förderrolle (2) ein Einklemmschutz (10) mit einer Lagerschildplatte (11) zugeordnet ist, die von dem Achsbolzen (7) der Förderrolle (2) durchgriffen ist und sich flächig an der Innenseite der Seitenwand (6) des Längsprofils (3) anlegt und dass an der Lagerschildplatte (11) mindestens zwei einen gegenseitigen Abstand zueinander aufweisende und annähernd zueinander parallele Abdeckplatten (12) lösbar befestigt sind, welche das Antriebsrad (8) der Förderrolle (2) mindestens teilweise abdecken und dass die Befestigung der Abdeckplatten (12) auf der Lagerschildplatte (11) steckbar ausgebildet ist und dass die Steckverbindung zwischen der Lagerschildplatte (11) und den Abdeckplatten (12) aus an den Abdeckplatten (12) angeformten Rastbolzen (13) besteht, die in zugeordneten Stecköffnungen (20) der Lagerschildplatte (11) lösbar eingreifen und dass die Lagerschildplatte (11) einen Hülsenansatz (18) trägt, der von dem Achsbolzen (7) der Förderrolle (2) durchgriffen ist.

2. Längsförderer nach Anspruch 1, **dadurch gekennzeichnet, dass** die Abdeckplatte (12) eine Bogenform (14) aufweist, die dem Durchmesser des Antriebsrades (8) angepasst ist.

3. Längsförderer nach Anspruch 1 oder 2, **dadurch gekennzeichnet, dass** das Längsprofil (3) horizontal nach außen gerichtete Profilschenkel (4, 5) aufweist und dass die Lagerung der Förderrollen (2) mit ihren Antriebsrädern (8) freiliegend auf der Innenseite des Längsprofils (3) angeordnet ist.

4. Längsförderer nach einem der Ansprüche 1 bis 3, **dadurch gekennzeichnet, dass** der Teilungsabstand (22) der Befestigung der Förderrollen (2) in der Seitenwand (6) der Längsprofils (3) frei wählbar ist.

5. Längsförderer nach einem der Ansprüche 1 bis 4, **dadurch gekennzeichnet, dass** die Abdeckplatten (12) wahlweise auch noch den oberen und/oder den unteren Bereich des jeweiligen Antriebsrades (8) mindestens teilweise abdecken.

6. Längsförderer nach einem der Ansprüche 1 bis 5, **dadurch gekennzeichnet, dass** die Lagerschildplatte (11) eine Kunststoffplatte ist, welche den über Verstärkungsrippen (21) angeformten Hülsenansatz (18) aufweist.

7. Längsförderer nach einem der Ansprüche 1 bis 6, **dadurch gekennzeichnet, dass** der Hülsenansatz (18) eine sechskantig profilierte Aufnahmeöffnung (19) bildet, durch welchen die Achse und/oder der an die profilierte Aufnahmeöffnung (19) formangepasste Achsbolzen (7) der Förderrolle (2) hindurchgreift und dort drehfest festgelegt ist.

## Claims

1. Longitudinal conveyer, in particular roller track, for conveying piece goods, consisting of a number of rotatably driven conveying means, preferably conveying rollers (2), which are mounted rotatably on axle bolts (7) with mutual spacing (22) in the side walls (6) of a longitudinal profile (3) and have a paired drive formed by drive belts (9), wherein for the paired drive, each driven conveying roller (2) has a drive wheel (8) wrapped around by two drive belts (9), **characterised in that** an anti-pinch device (10) with an end shield (11), which is penetrated by the axle bolt (7) of the conveying roller (2), is assigned to each drive wheel (8) of the conveying means, preferably the conveying roller (2), and rests flat on the inner side of the side wall (6) of the longitudinal profile (3) and **in that** at least two cover plates (12) having a mutual distance from one another and approximately parallel to one another are attached releasably to the end shield (11), which cover plates (12) at least partly cover the drive wheel (8) of the conveying roller (2) and **in that** attachment of the cover plates (12) on the end shield (11) is configured to be pluggable and **in that** the plug connection between the end shield (11) and the cover plates (12) consists of locking bolts (13) moulded on the cover plates (12) which engage releasably in assigned plug openings (20) of the end shield (11) and **in that** the end shield (11) supports a sleeve shoulder (18) which is penetrated by the axle bolt (7) of the conveying roller (2).

2. Longitudinal conveyer according to claim 1, **characterised in that** the cover plate (12) has an arc shape (14) which is adapted to the diameter of the drive wheel (8).

3. Longitudinal conveyer according to claim 1 or 2, **characterised in that** the longitudinal profile (3) has horizontally outwardly directed profile limbs (4, 5) and **in that** mounting of the conveying rollers (2) with their drive wheels (8) is arranged exposed on the inner side of the longitudinal profile (3).

4. Longitudinal conveyer according to one of claims 1 to 3, **characterised in that** the spacing (22) of the attachment of the conveying rollers (2) in the side wall (6) of the longitudinal profile (3) can be selected freely.

5. Longitudinal conveyer according to one of claims 1 to 4, **characterised in that** the cover plates (12) at least partly cover alternatively also the upper and/or the lower region of the respective drive wheel (8).

6. Longitudinal conveyer according to one of claims 1 to 5, **characterised in that** the end shield (11) is a plastic plate which has the sleeve shoulder (18) moulded on via reinforcing ribs (21).

7. Longitudinal conveyer according to one of claims 1 to 6, **characterised in that** the sleeve shoulder (18) forms a hexagonally profiled receiving opening (19), through which the axle and/or the axle bolt (7) of the conveying roller (2) conforming to the profiled receiving opening (19) engages and is fixed there to be resistant to rotation.

## Revendications

1. Transporteur longitudinal, en particulier un chemin à rouleaux, pour le transport de marchandises conditionnées, constitué d'un certain nombre de moyens de transport entraînés en rotation, de préférence de rouleaux de transport (2), qui sont supportés à une distance de séparation (22) mutuelle de manière à pouvoir tourner sur des boulons d'axe (7) dans les parois latérales (6) d'un profilé longitudinal (3) et présentent un entraînement par paire formé de courroies de transmission (9), dans lequel chaque rouleau de transport (2) entraîné présente une roue d'entraînement (8) entourée de deux courroies de transmission (9) pour l'entraînement par paire, **caractérisé en ce qu'**à chaque roue d'entraînement (8) du moyen de transport, de préférence du rouleau de transport (2), est associée une protection anti-coincement (10) comprenant une plaque de flasque (11) qui est traversée par le boulon d'axe (7) du rouleau de transport (2) et se place à plat du côté intérieur de la paroi latérale (6) du profilé longitudinal (3), et qu'au moins deux plaques de recouvrement (12) présentant une distance mutuelle l'un par rapport à l'autre et approximativement parallèles l'un à l'autre sont fixées de manière amovible sur la plaque de flasque (11), lesquelles recouvrent au moins en partie la roue d'entraînement (8) du rouleau de transport (2), et que la fixation des plaques de recouvrement (12) sur la plaque de flasque (11) est réalisée de manière enfichable, et que la liaison enfichable entre la plaque de flasque (11) et les plaques de recouvrement (12) est constituée de boulons d'enclenchement (13) formés sur les plaques de recouvrement (12), qui viennent en prise de manière amovible avec des ouvertures d'enfichage (20) associées de la plaque de flasque (11), et que la plaque de flasque (11) porte une cosse (18) qui est traversée par le boulon d'axe (7) du rouleau de transport (2).

2. Transporteur longitudinal selon la revendication 1, **caractérisé en ce que** la plaque de recouvrement (12) présente une forme d'arc (14) qui est adaptée au diamètre de la roue d'entraînement (8).

3. Transporteur longitudinal selon la revendication 1 ou 2, **caractérisé en ce que** le profilé longitudinal (3) présente des branches profilées (4, 5) dirigées horizontalement vers l'extérieur, et que le support des rouleaux de transport (2) avec leurs roues d'entraînement (8) est disposé de manière dégagée du côté intérieur du profilé longitudinal (3).

4. Transporteur longitudinal selon l'une des revendications 1 à 3, **caractérisé en ce que** la distance de séparation (22) de la fixation des rouleaux de transport (2) dans la paroi latérale (6) du profil longitudinal (3) peut être choisie librement.

5. Transporteur longitudinal selon l'une des revendications 1 à 4, **caractérisé en ce que** les plaques de recouvrement (12) recouvrent sélectivement au moins en partie également encore la zone supérieure et/ou la zone inférieure de la roue d'entraînement (8) respective.

6. Transporteur longitudinal selon l'une des revendications 1 à 5, **caractérisé en ce que** la plaque de flasque (11) est une plaque en matière plastique qui présente la cosse (18) formée au-dessus de nervures de renforcement (21).

7. Transporteur longitudinal selon l'une des revendications 1 à 6, **caractérisé en ce que** la cosse (18) forme une ouverture de logement (19) profilée de manière hexagonale à travers laquelle l'axe et/ou le boulon d'axe (7) de forme adaptée à l'ouverture de logement (19) profilée vient en prise avec le rouleau de transport (2) et y est fixé de manière solidaire en rotation.
